Europäisches Patentamt

European Patent Office

Office européen des brevets

(19)

(11) Numéro de publication: **0 408 472 A1**

(12) **DEMANDE DE BREVET EUROPEEN**

(21) Numéro de dépôt: 90420322.1

(22) Date de dépôt: 09.07.90

(51) Int. Cl.5: **H02J 3/14**

(30) Priorité: 10.07.89 FR 8909561

(43) Date de publication de la demande:
16.01.91 Bulletin 91/03

(84) Etats contractants désignés:
AT BE CH DE DK ES GB GR IT LI LU NL SE

(71) Demandeur: EUROTHERM AUTOMATION S.A.,
Société Anonyme:
Parc d'Affaires de Dardilly 6, chemin des
Joncs B.P. 55

F-69572 Dardilly Cédex(FR)

(72) Inventeur: Level, Yves Michel Emile
475, route des Condamines
F-69390 Vernaison(FR)

(74) Mandataire: Ropital-Bonvarlet, Claude
Cabinet BEAU DE LOMENIE, 51, avenue
Jean-Jaurès
F-69007 Lyon(FR)

(54) **Procédé et dispositif de commande de l'alimentation de charges, adaptés pour réduire les fluctuations de tension sur le réseau.**

(57) - Commande de l'alimentation de charges.

- Le procédé selon l'invention, pour commander, à partir d'un réseau unique d'ondes, l'alimentation de n charges ($Z_1$, $Z_2$, ... $Z_n$) consiste :

. à commander en pleine onde un nombre déterminé ($\overline{N}$) de moyens d'interruption (7) afin que les charges associées consomment chacune leur puissance maximale, le nombre ($\overline{N}$) de moyens d'interruption commandés étant déterminé de manière que la différence de puissance (dP), entre la somme des puissances maximales des charges commandées et la puissance désirée, soit inférieure à la puissance maximale d'une des charges du groupe,

. à commander en modulation d'onde un moyen d'interruption (7) déterminé, de manière que la charge associée consomme la différence de puissance (dP),

. et à commander les autres moyens d'interruption (7) en mode non conducteur.

- Application aux résistances de chauffage.

FIG. 1

EP 0 408 472 A1

La présente invention concerne le domaine technique général des procédés et dispositifs électroniques d'alimentation et/ou de réglage, aptes à faire varier le courant qu'un réseau électrique alternatif monophasé ou triphasé, débite dans des charges pouvant être, en particulier, résistives et constituées, par exemple, par des résistances de chauffage, des éléments émetteurs infrarouge ou des électrolytes.

L'art antérieur a déjà proposé des dispositifs d'alimentation de charges comprenant une boucle de régulation dans laquelle un bloc de contrôle de la puissance d'une charge, dénommé gradateur de puissance est monté en série dans chaque ligne d'alimentation de charges correspondant à une phase du réseau d'alimentation. De façon classique, chaque gradateur de puissance est constitué par un couple de thyristors connectés en parallèle inverse et formant un moyen d'interruption de l'alimentation de chacune des charges.

Les avantages, résultant de l'utilisation de tels dispositifs à semi-conducteurs pour l'alimentation et le réglage des charges ont entraîné un développement rapide de ces dispositifs.

Cependant, de tels dispositifs, équipant des charges, sont susceptibles de provoquer des perturbations nuisibles au bon fonctionnement des charges et du réseau d'alimentation.

Aussi, il a été proposé, lorsque les perturbations occasionnées par le fonctionnement de chaque gradateur monté dans une ligne d'alimentation du réseau, risquent d'être excessives, de diviser chaque charge en plusieurs éléments commandés chacun par un gradateur, de manière à améliorer le facteur de puissance de l'installation.

Une telle installation présente, encore, en pratique, des inconvénients en raison des modes de fonctionnement possibles des gradateurs.

Le premier type connu de fonctionnement des gradateurs concerne la commande par trains d'ondes. Un tel procédé consiste à permettre le passage du courant pendant un certain nombre d'alternances consécutives de la tension d'alimentation et à l'interrompre ensuite pendant un autre nombre d'alternances consécutives de la tension d'alimentation. Les différentes combinaisons du temps de passage et d'interruption du courant permettent de faire varier la puissance moyenne absorbée par la charge.

Il apparaît donc que les dispositifs de commande par trains d'ondes provoquent des variations du courant absorbé par la charge qui engendrent à leur tour des variations de tension. Ces variations peuvent donner naissance au phénomène dit de **"flicker"** (papillotement), en raison des chutes répétitives de tension apparaissant sur le réseau d'alimentation.

Le second type connu de commande des gradateurs concerne le procédé par réglage de phase. Un tel procédé consiste à faire varier l'instant de la période à partir duquel est autorisé l'allumage du thyristor. La variation de cet instant, caractérisé par la valeur de l'angle de retard, permet de faire varier la puissance de la charge associée.

Les dispositifs de commande par réglage de phase provoquent, en raison de leur mode de fonctionnement, des déformations des courants absorbés par la charge qui, à leur tour, engendrent des harmoniques de tension dans le réseau d'alimentation. Dans certains cas, en outre, lors de variations de l'angle de retard, les variations du courant absorbé peuvent provoquer des fluctuations de tension génératrices du phénomène de flicker. Par ailleurs, la consommation d'énergie réactive est accrue, ce qui entraîne une dégradation du facteur de puissance.

Il convient donc de constater que l'utilisation de dispositifs de commande de l'alimentation de charges par réglage de phase ou par trains d'ondes, augmente sensiblement les harmoniques et les fluctuations de tension dans les réseaux d'alimentation électrique. Ces phénomènes perturbateurs peuvent, d'une part, avoir des répercussions nuisibles sur les divers équipements et installations connectés au réseau d'alimentation, ainsi que sur le réseau d'alimentation et, d'autre part, provoquer des perturbations physiologiques gênantes pour les abonnés, en raison du phénomène de flicker.

La présente invention vise donc à remédier aux inconvénients énoncés ci-dessus, en proposant un procédé et un dispositif de commande de l'alimentation de charges, à partir d'un réseau électrique monophasé ou triphasé, conçu pour réduire les fluctuations de tension sur le réseau d'alimentation, quel que soit le mode de commande des gradateurs par réglage de phase ou par trains d'ondes.

L'invention vise aussi à proposer un procédé permettant de commander l'alimentation de charges suivant divers modes de fonctionnement, en fonction du type d'application choisie.

L'invention vise, également, à offrir un procédé de commande de l'alimentation de charges permettant de limiter le nombre de gradateurs utilisés en remplaçant certains d'entre eux par des interrupteurs électro-mécaniques.

L'invention vise, encore, à proposer un procédé de commande de l'alimentation de charges qui, lorsque celles-ci sont constituées par des résistances de chauffage, permet d'obtenir une répartition homogène de la chaleur.

L'invention vise à offrir aussi un dispositif adapté pour mettre en oeuvre le procédé de commande conforme à l'invention, permettant de passer facilement d'un mode de fonctionnement des gradateurs à un autre et ce, quel que soit le nombre de charges commandées.

Pour atteindre les buts ci-dessus, le procédé selon l'invention pour commander, à partir d'un réseau unique d'ondes l'alimentation de **n** charges consommant chacune une puissance maximale, du type consistant à piloter un ensemble de moyens d'interruption assurant le contrôle de l'alimentation des charges, chaque moyen d'interruption étant placé en série avec une charge, est caractérisé en ce qu'il consiste, pour chaque puissance totale désirée consommée par un groupe de charges :

- à commander en pleine onde un nombre déterminé de moyens d'interruption afin que les charges associées consomment chacune leur puissance maximale, le nombre de moyens d'interruption commandés étant déterminé de manière que la différence de puissance, entre la somme des puissances maximales des charges commandées et la puissance désirée, soit inférieure à la puissance maximale d'une des charges du groupe,

- à commander en modulation d'onde un moyen d'interruption déterminé, de manière que la charge associée consomme la différence de puissance entre la somme des puissances des charges commandées en pleine onde et la puissance désirée,

- et à commander les autres moyens d'interruption en mode non conducteur, afin que les charges associées consomment chacune une puissance nulle.

L'invention a également pour objet un dispositif de commande de l'alimentation de charges comportant :

- un microcontrôleur,
- un convertisseur numérique analogique dont la sortie est reliée à un multiplexeur,
- une série d'échantillonneurs-bloqueurs reliés au multiplexeur et commandant chacun un moyen d'interruption,
- un circuit comparateur recevant les informations de la sortie du convertisseur numérique-analogique et d'un régulateur associé à chaque groupe de charges,
- et un circuit de sélection permettant de choisir le signal analogique ou logique de commande des moyens d'interruption, ainsi qu'un circuit de sélection du mode de commande des moyens d'interruption.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est un schéma-bloc simplifié montrant les différents modules d'un dispositif conforme à l'invention de commande de l'alimentation de charges.

La **fig. 2** est un schéma-bloc montrant un exemple de configuration mettant en oeuvre une série de dispositifs de commande selon l'invention.

Les **fig. 3A, 3B** et **4A, 4B** sont des diagrammes représentant des exemples de puissance consommée par les charges, lors de la commande des moyens d'interruption selon un premier mode de fonctionnement.

Les **fig. 3C** et **4C** sont des schémas montrant la puissance totale consommée par les charges commandées par le mode de fonctionnement, respectivement, selon les **fig. 3A** et **4A**.

Les **fig. 5A, 5B** et **6A, 6B** sont des diagrammes représentant des exemples de puissance consommée par les charges lors de la commande des moyens d'interruption selon un second mode de fonctionnement conforme à l'invention.

Les **fig. 7A à 7D** représentent des diagrammes montrant des exemples de puissance consommée par les charges, lors de la commande des moyens d'interruption selon un troisième mode de fonctionnement.

La **fig. 7E** représente un schéma représentant la puissance totale consommée par les charges commandées par les modes de fonctionnement illustrés aux **fig. 7B** ou **7C**.

Les **fig. 8A** et **9** représentent des diagrammes montrant un exemple de puissance consommée par des charges, lors de la commande des moyens d'interruption selon deux autres modes de fonctionnement des gradateurs.

La **fig. 8B** montre un schéma représentant la puissance totale consommée par les charges commandées, respectivement, par les modes de fonctionnement illustrés aux **fig. 8A** et **9**.

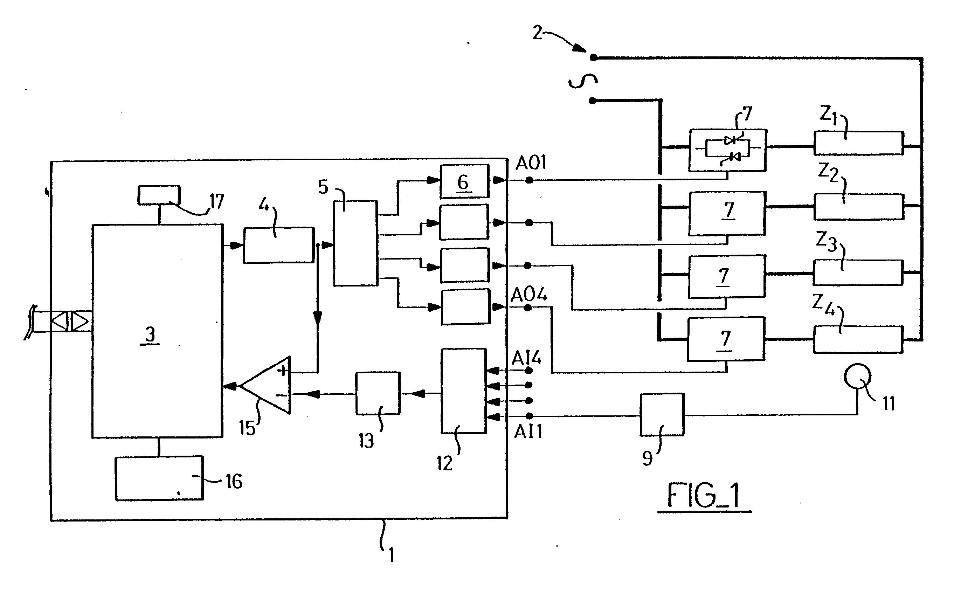

La **fig. 1** illustre le schéma simplifié d'un dispositif de commande **1** destiné à réguler l'alimentation de charges $Z_i$, par exemple résistives, à partir d'un réseau électrique alternatif **2**, monophasé ou triphasé, tout en permettant de limiter les fluctuations de tension sur le réseau d'alimentation **2**,

Le dispositif de commande **1** comporte un microcontrôleur **3** dont les divers circuits, nécessaires à son fonctionnement, n'ont pas été représentés, dans la mesure où ils ne font pas partie de l'objet de l'invention. Le microcontrôleur **3** est connecté à un convertisseur numérique-analogique **4** dont la sortie est reliée à l'entrée d'un multiplexeur **5** dont chacune des sorties du multiplexeur **5** est connectée à un circuit échantillonneur-bloqueur **6**. Chaque sortie analogique $AO_1$ à $AO_4$ d'un circuit **6** assure la commande d'un moyen d'interruption **7** constitué, soit par un couple de thyristors connectés en parallèle inverse, appelé généralement gradateur, soit par un interrupteur électromécanique, ou soit, de manière générale, par tout autre moyen de coupure du circuit. Chaque moyen d'interruption **7** est monté en série avec une charge et forme un bloc de contrôle de la puissance de la charge associée ($Z_1$ à $Z_4$).

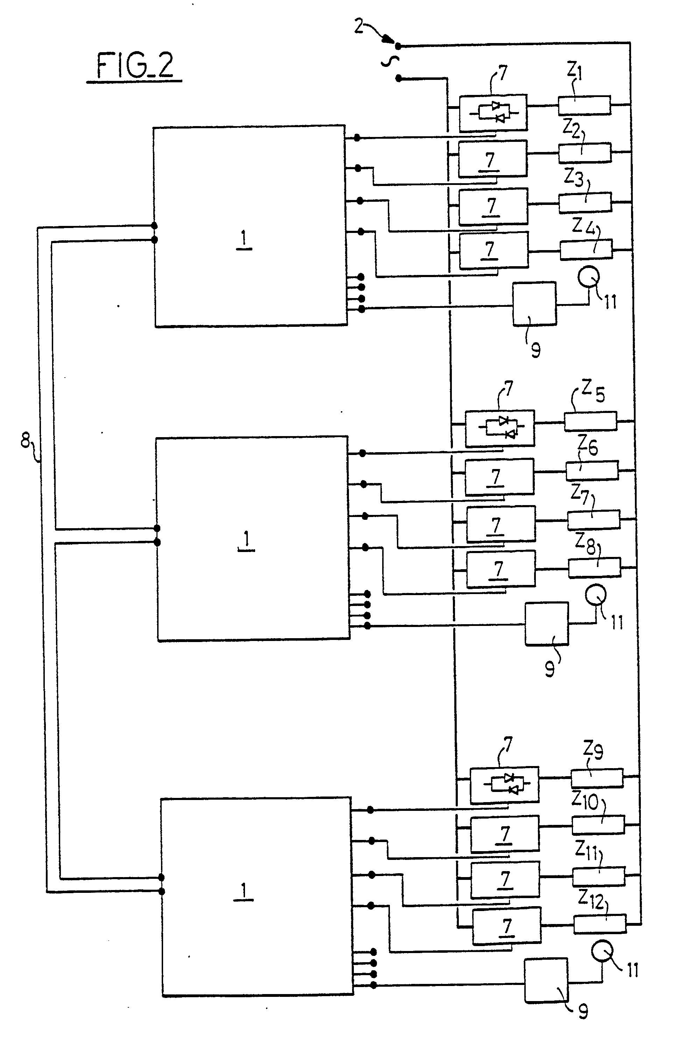

Les ensembles formés par un moyen d'interruption **7** associé en série avec une charge, sont montés en parallèle sur les lignes d'alimentation du réseau. A titre d'exemple, le réseau **2**, illustré sur la **fig. 2**, est monophasé.

Il doit être noté que le dispositif **1**, conforme à l'invention, est élaboré pour comporter quatre sorties analogiques de commande pour l'alimentation de charges. Bien entendu, dans le cas où une installation impose la mise en oeuvre de **n** charges $Z_i$ (avec **i** variant de 1 à **n** ), il peut être envisagé de relier entre eux une série de dispositifs de commande **1**, par l'intermédiaire d'un bus de communication **8**, tel que cela apparaît à la **fig. 2**. Dans cette configuration multiprocesseurs, il doit être considéré que l'un des microcontrôleurs **3** constitue un processeur maître, tandis que les autres microcontrôleurs forment des processeurs esclaves.

Par ailleurs, le dispositif **1** comporte des entrées analogiques $AI_1$ à $AI_4$ permettant d'entrer un signal de consigne correspondant à la demande de puissance et issu, par exemple, d'un régulateur ou de tout autre générateur de consigne. Dans le cas où les charges sont constituées par des résistances, il peut être prévu qu'une valeur de consigne soit délivrée par un régulateur **9** qui reçoit l'information d'un capteur de température **11** monté à proximité des charges. Le régulateur **9** est connecté, par exemple, à l'entrée $AI_1$ d'un multiplexeur **12** dont la sortie est reliée, par l'intermédiaire d'un filtre **13**, à l'une des entrées d'un comparateur **15**. L'autre entrée du comparateur **15** reçoit l'information provenant de la sortie du convertisseur numérique-analogique **4**.

Le dispositif **1** comporte, également, un circuit de sélection **16**, permettant de chosir le type du signal de commande des gradateurs, délivré par les sorties $AO_1$-$AO_4$. Le signal peut ainsi être du type logique, pour la commande en train d'ondes, ou analogique, pour la commande en retard de phase ou train d'ondes.

Par ailleurs, le microcontrôleur **3** est associé à un circuit **17** permettant de sélectionner, par exemple à l'aide de cavaliers et en fonction de l'application visée, l'un des modes de commande des moyens d'interruption **7**, conforme à l'invention.

La description qui suit expliquera en détail les divers modes ou principes de commande des moyens d'interruption **7** assurant la limitation des fluctuations de tension sur le réseau.

Préalablement à la description du premier mode de fonctionnement, il est rappelé que les moyens d'interruption **7** sont commandés de manière que la puissance totale $P_t$ consommée par le groupe de **n** charges ($Z_1$, $Z_2$, $Z_3$ ... $Z_n$) qui consomment chacune une puissance maximale ($P_1$, $P_2$, $P_3$ ... $P_n$), corresponde à une valeur de puissance consommée choisie.

Il doit être considéré que les **n** charges et, par suite, les **n** moyens d'interruption **7** associés, sont classés selon un ordre arbitraire déterminé en fonction de l'application visée. Par ailleurs, pour faciliter la compréhension de la description qui suit, il est pris comme hypothèse que les charges possèdent des valeurs sensiblement identiques.

Le premier mode de fonctionnement est appelé le mode incrémental de type 1. Ce procédé vise à commander, parmi les **n** moyens d'interruption **7**, un nombre déterminé **N** de moyens d'interruption **7**, de manière que ces **N** moyens d'interruption **7** fonctionnent en pleine onde, c'est-à-dire que les charges associées aux **N** moyens d'interruption **7** consomment chacune leur puissance maximale. Il est rappelé que le fonctionnement en pleine onde d'un gradateur est tel que la tension aux bornes de la charge associée est égale à la tension de la source ou que le courant dans la charge est celui obtenu lorsque le gradateur est en court-circuit.

Le nombre **N** de moyens d'interruption **7** commandés en pleine onde est déterminé de manière que la différence de puissance **dP**, entre la somme des puissances maximales des charges $Z_i$ commandées en pleine onde et la puissance désirée $P_t$, soit inférieure à la puissance maximale d'une des charges.

Le procédé vise, également, à commander, en modulation d'onde, un unique moyen d'interruption **7** déterminé, de manière que la charge associée au moyen d'interruption commandé en modulation d'onde, consomme la différence de puissance **dP**. Les autres moyens d'interruption **7**, en nombre égal à **n - (N + 1)**, sont commandés en mode non conducteur, afin que leurs charges associées consomment chacune une puissance nulle.

Selon le mode incrémental du type 1, il est prévu que les **N** moyens d'interruption commandés en pleine onde correspondent aux **N** premiers moyens d'interruption **7** classés selon un ordre déterminé, tandis que le moyen d'interruption commandé en modulation d'onde corresponde au **N + 1ième** moyen d'interruption.

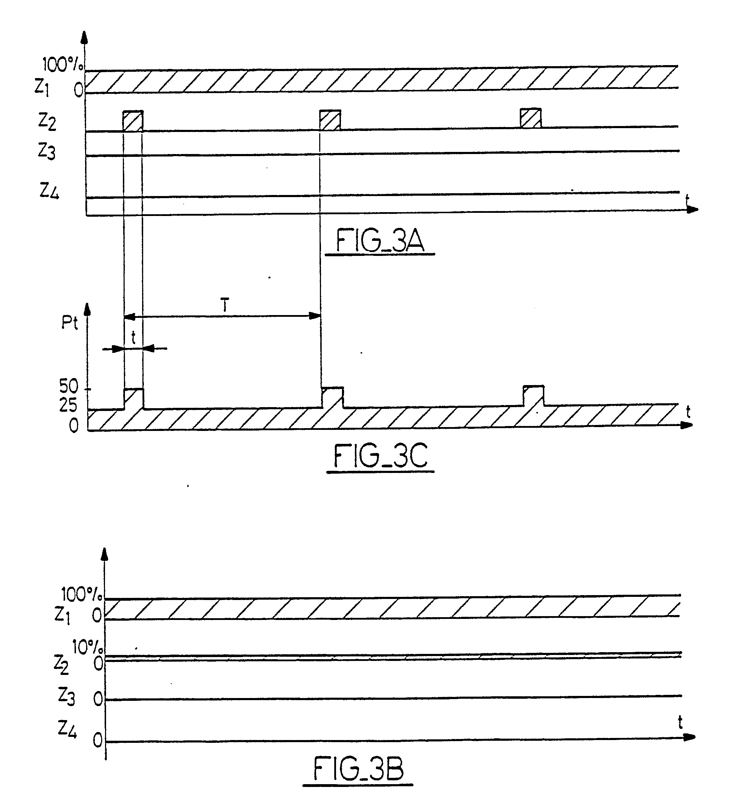

La **fig. 3A** illustre un exemple de commande des moyens d'interruption selon le mode incrémental du type 1, dans lequel quatre charges $Z_1$ à $Z_4$ sont alimentées de manière que la puissance désirée $P_t$, consommée par les quatre charges, corresponde à 27,5 % de la somme des puissances maximales des quatre charges. Chaque charge représente donc une puissance égale à 25 % de la puissance totale maximale consommée.

Dans cet exemple, le nombre **N** de moyens d'interruption fonctionnant en pleine onde est égal à 1 et correspond au moyen d'interruption commandant la charge $Z_1$. La différence de puissance :
**dP = 27,5 % - 25 % = 2,5 %** est consommée par la charge qui suit, dans l'ordre établi, la dernière des charges commandées en pleine onde. Aussi, le moyen d'interruption associé à la charge $Z_2$ est commandé, afin que cette dernière consomme 10 % de sa puissance maximale, c'est-à-dire la différence de puissance dp = 10 %.25 % = 2,5 %. Dans le cas où les moyens d'interruption 7 sont commandés en train d'ondes, le rapport cyclique, défini comme le temps de conduction t des thyristors sur la période totale T de modulation du moyen d'interruption, doit être égal à 10 % (**fig. 3A**). Dans le cas où les moyens d'interruption 7 sont commandés en retard de phase par un signal analogique, la charge $Z_2$ consomme de façon continue 10 % de sa puissance maximale (**fig. 3B**).

Les moyens d'interruption associés aux charges $Z_3$, $Z_4$ sont commandés en mode non conducteur, de telle sorte que des charges ne consomment aucune puissance.

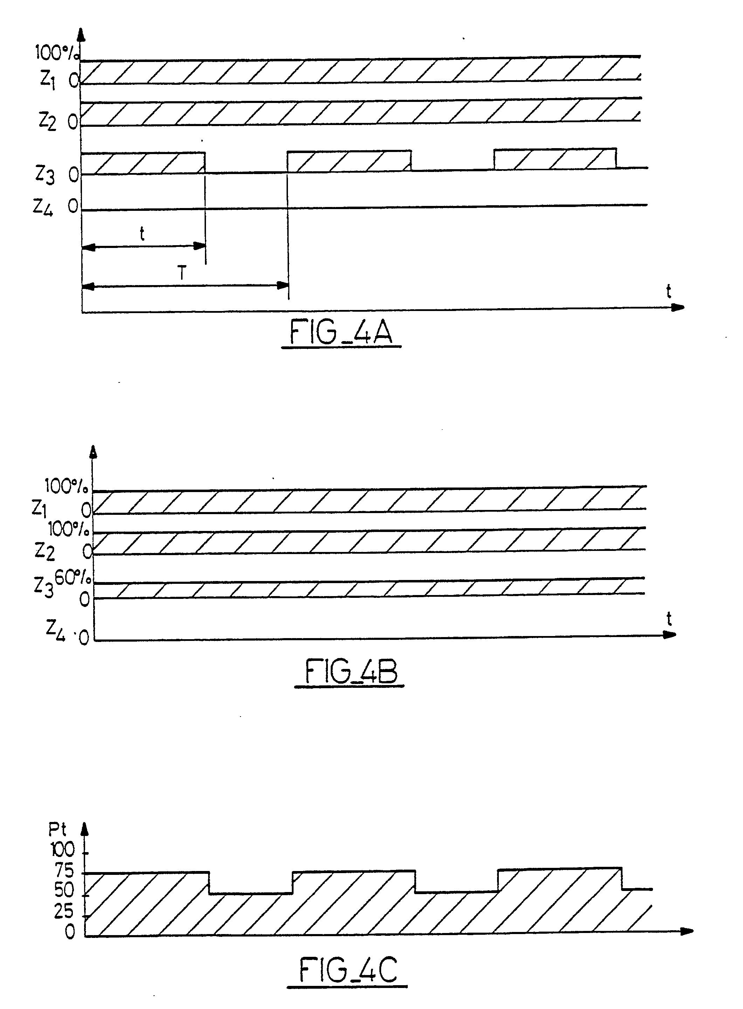

Les **fig. 4A** et **4B** illustrent un autre exemple de commande des moyens d'interruption, respectivement, par un signal logique et un signal analogique, suivant le mode incrémental du type 1 et pour lequel la puissance consommée désirée $P_t$ = 67,5 %. Dans cet exemple, les deux premières charges, à savoir $Z_1$, $Z_2$ sont commandées en pleine onde, la charge $Z_3$ est commandée à 60 % de sa puissance maximale, tandis que la charge $Z_4$ est commandée pour ne consommer aucune puissance, de telle sorte que :

$$P_t = 2.100 \text{ %}.25 \text{ %} + 60 \text{ %}.25 \text{ %} = 67,5 \text{ %}$$

Tel que cela ressort plus précisément des **fig. 3C, 4C**, les variations de puissances demandées sur le réseau sont limitées, dans la mesure où la modulation de la puissance s'effectue par l'intermédiaire d'une charge unique. Un tel mode de commande des moyens d'interruption peut être avantageusement mis en oeuvre avec une période T de modulation longue dans le cas de charges constituées par des compresseurs.

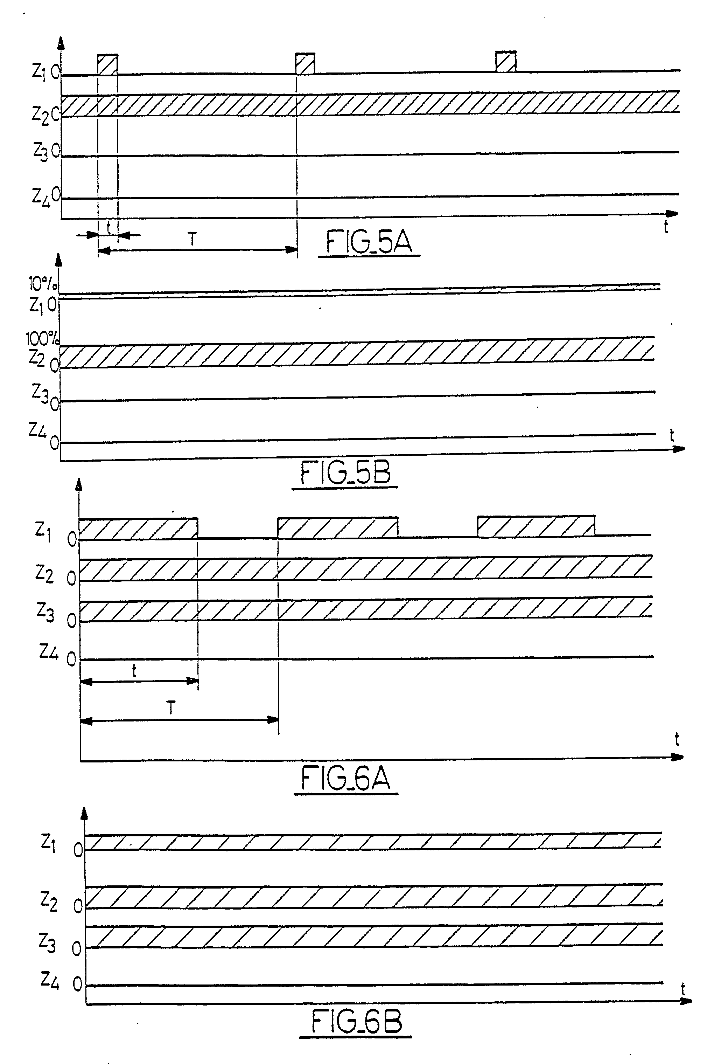

Les **fig. 5A, 5B** illustrent un second mode de fonctionnement des moyens d'interruption appelé le mode incrémental de type 2. Selon un tel mode, le moyen d'interruption commandé en modulation d'onde correspond au premier moyen d'interruption, tandis que les **N** moyens d'interruption commandés en pleine onde correspondent aux **2 à N + 1ième** moyens d'interruption. Dans l'exemple illustré, la puissance consommée désirée $P_t$ = 27,5 %, de telle sorte que la charge $Z_1$ fonctionne à 10 % de sa puissance maximale, tandis que la charge $Z_2$ consomme 100 % de sa puissance. Les charges $Z_3$, $Z_4$ ne consomment aucune puissance (**fig. 5A**). Bien entendu, un tel procédé de commande peut être mis en oeuvre dans le cas où les moyens d'interruption sont des gradateurs commandés en retard de phase (**fig. 5B**).

Les **fig. 6A, 6B** illustrent un autre exemple de réalisation de commande des moyens d'interruption selon le mode de type 2, respectivement, par un signal logique et un signal analogique, dans lequel la puissance $P_t$ = 67,5 %. Pour obtenir une telle puissance, la charge $Z_1$ consomme 60 % de sa puissance maximale, tandis que les charges $Z_2$, $Z_3$ fonctionnent à 100 % de leur puissance maximale. La charge $Z_4$ ne consomme aucune puissance.

Il est à remarquer que la mise en oeuvre du mode de commande incrémental du type 2, autorise le remplacement des gradateurs associés aux charges $Z_2$, $Z_3$, $Z_4$, par un interrupteur électromécanique dans la mesure où ces charges ne changent que rarement d'état (0 ou 100 % de puissance).

Par ailleurs, les deux modes de commande décrits ci-dessus sont appelés incrémental dans la mesure où les charges sont commandées ou désexcitées pas à pas, successivement d'une charge à une autre, selon la puissance désirée.

Un tel procédé de commande permet aussi de limiter les variations d'amplitude des demandes de tension sur le réseau, dans la mesure où la puissance totale demandée Pt, selon les modes illustrés aux **fig. 5A, 6A**, correspond, respectivement, à celle illustrée sur les **fig. 3C, 4C**.

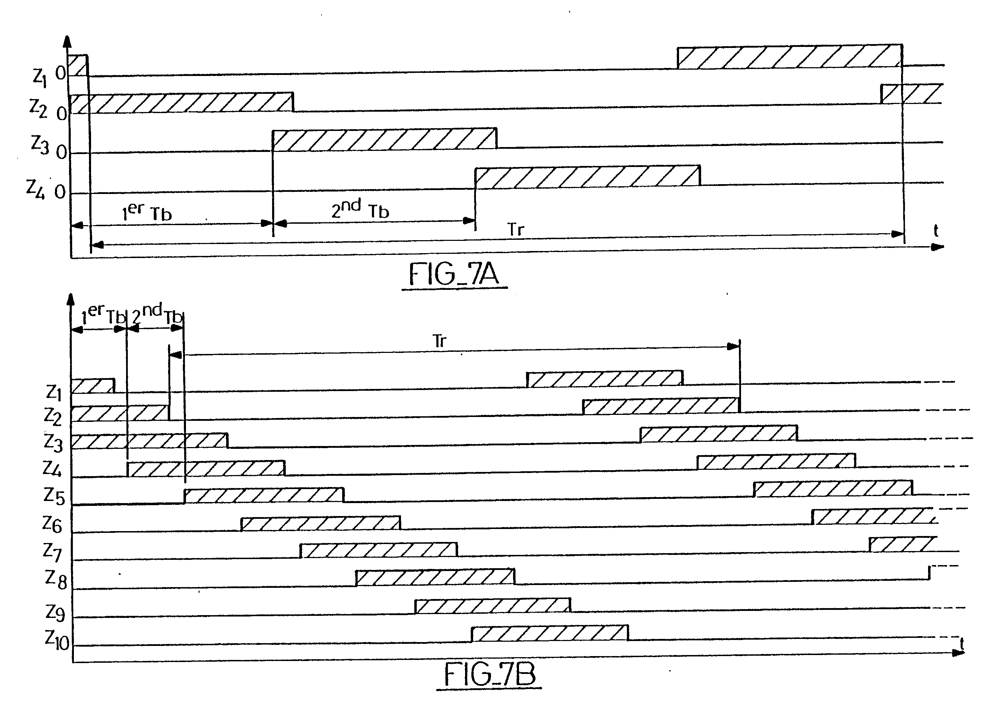

La **fig. 7A** illustre un troisième mode de fonctionnement des moyens d'interruption, appelé le mode incrémental tournant. Ce procédé de commande consiste, après avoir déterminé une période de base **Tb**, à commander, pendant chaque période de base, chaque moyen d'interruption 7 selon le mode de fonctionnement que le moyen d'interruption du rang précédent possédait à la période de base **Tb** précédente. De plus, il doit être considéré que les moyens d'interruption sont commandés pendant chaque période de base suivant le mode incrémental du type 1 ou 2.

A titre d'exemple, la **fig. 7A** illustre le mode de commande incrémental tournant dérivant du mode incrémental du type 2. En effet, pour une puissance demandée totale $P_t$ = 27,5 %, il apparaît, pendant la première période de base **Tb** choisie, que la charge $Z_1$ fonctionne à 10 % de sa puissance maximale, la charge $Z_2$ consomme 100 % de sa puissance, tandis que les charges $Z_3$, $Z_4$ fonctionnent à 0 %. Pendant la seconde période de base **Tb**, les charges $Z_1$, $Z_2$, $Z_3$, $Z_4$ présentent un fonctionnement identique à celui pris, respectivement, par les charges $Z_4$, $Z_1$, $Z_2$, $Z_3$ pendant la première période de base **Tb**. Ainsi, lors de la seconde période de base **Tb**, les charges $Z_1$ et $Z_4$ fonctionnent à 0 % de leur puissance maximale, la charge $Z_2$ consomme 10 % de sa puissance, tandis que la charge $Z_3$ consomme 100 % de sa puissance. A chaque période suivante de base **Tb**, le fonctionnement des charges est décalé de la même façon. Il est à noter que l'ensemble des charges présente cycliquement un fonctionnement identique au terme d'une période de récurrence **Tr** correspondant à **n** fois la période de base **Tb**.

La **fig. 7B** illustre le mode de commande tournant appliqué au mode incrémental de type 2, pour une puissance demandée totale $P_t$ = 27,5 %, répartie sur dix charges dont la puissance de chacune d'entre elles correspond à 10 % de la puissance totale disponible. Dans cet exemple, pendant la première période de base **Tb**, la charge $Z_1$ fonctionne à 75 % de sa puissance maximale, les charges $Z_2$ et $Z_3$ consomment 100 % de leur puissance, alors que les charges $Z_4$ à $Z_{10}$ fonctionnent à 0 %. Pendant la seconde période de base **Tb**, la charge $Z_1$ est commandée selon le fonctionnement que la charge $Z_{10}$ possédait lors de la première période de base, et ainsi de suite pour les autres charges. De ce fait, pendant cette seconde période de base **Tb**, les charges $Z_1$ et $Z_5$ à $Z_{10}$ fonctionnent à 0 % de leur puissance maximale, les charges $Z_3$ et $Z_4$ fonctionnent à 100 % de leur puissance maximale, tandis que la charge $Z_2$ consomme 75 % de sa puissance maximale. Le même décalage de fonctionnement des charges est effectué pour les périodes de base suivantes.

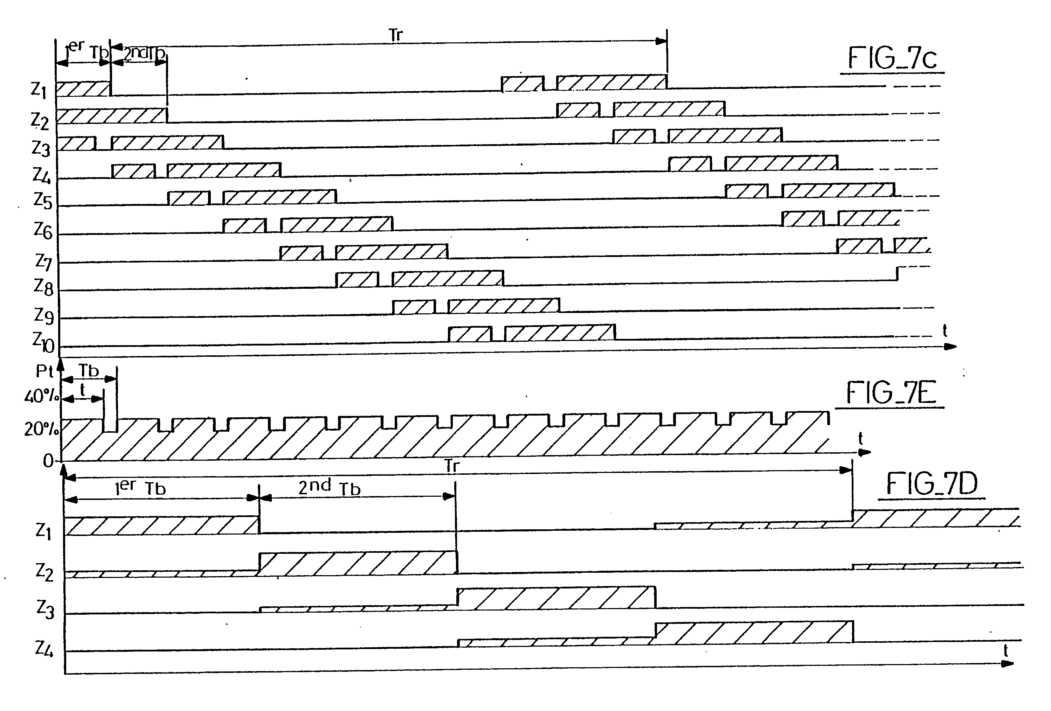

Bien entendu, il peut être également envisagé d'appliquer un tel décalage au mode incrémental du type 1, tel que cela est illustré à la **fig. 7C**. Par exemple, si la puissance demandée $P_c$ = 27,5 % réparties sur dix charges, pour la première période de base **Tb**, les charges $Z_1$, $Z_2$ fonctionnent à 100 %, la charge $Z_3$ fonctionne à 75 %, alors que les charges $Z_4$ à $Z_{10}$ consomment 0 % de leur puissance. Pour la seconde période de base **Tb**, les charges $Z_1$ et $Z_5$ à $Z_{10}$ fonctionnent à 0 %, la charge $Z_4$ consomme 75 %, alors que les charges $Z_2$, $Z_3$ fonctionnent à 100 % de leur puissance. Un tel décalage de fonctionnement est effectué pour chacune des périodes de base suivantes, comme cela apparaît clairement sur la **fig. 7C**.

Par ailleurs, un tel mode incrémental tournant de commande peut être, également, mis en oeuvre lorsque les moyens d'interruption 7 sont commandés par un signal analogique, comme cela est illustré à la **fig. 7D**.

A titre d'exemple, la **fig. 7 D** montre un mode de commande tournant, appliqué au mode incrémental de type 1 à commande analogique. Pour une puissance $P_t$ = 27,5 % réparties sur quatre charges, il doit être considéré que, pour la première période de base **Tb**, la charge $Z_1$ consomme 100 % de sa puissance, la charge $Z_2$ fonctionne à 10 %, alors que les charges $Z_3$, $Z_4$ consomment 0 % de leur puissance. Pour la seconde période de base **Tb**, la charge $Z_2$ fonctionne à 100 %, la charge $Z_3$ consomme 10 %, alors que les charges $Z_1$, $Z_4$ consomment 0 % de leur puissance.

Bien entendu, il peut être prévu de commander les moyens d'interruption par un signal analogique selon le mode tournant appliqué au mode incrémental du type 2.

Il doit être remarqué que la puissance consommée sur le réseau dans le temps, lors de ce mode de fonctionnement est identique à la puissance consommée lors des modes de fonctionnement incrémentaux du type 1 et 2. Ainsi, la puissance consommée par les charges commandées, conformément à la **fig. 7B** ou 7C, correspond au diagramme illustré à la **fig. 7E**, alors que celle consommée selon le mode illustré par la **fig. 7A** correspond au diagramme de la **fig. 3C**.

Un tel mode de fonctionnement présente un avantage qui est celui de distribuer la puissance consommée entre les différentes charges, tout en permettant de limiter les fluctuations de tension sur le réseau. Ce mode de fonctionnement se trouve particulièrement adapté lorsque les charges constituent des résistances chauffantes équipant un four, de sorte qu'il est possible d'obtenir une bonne distribution de la chaleur à l'intérieur du four.

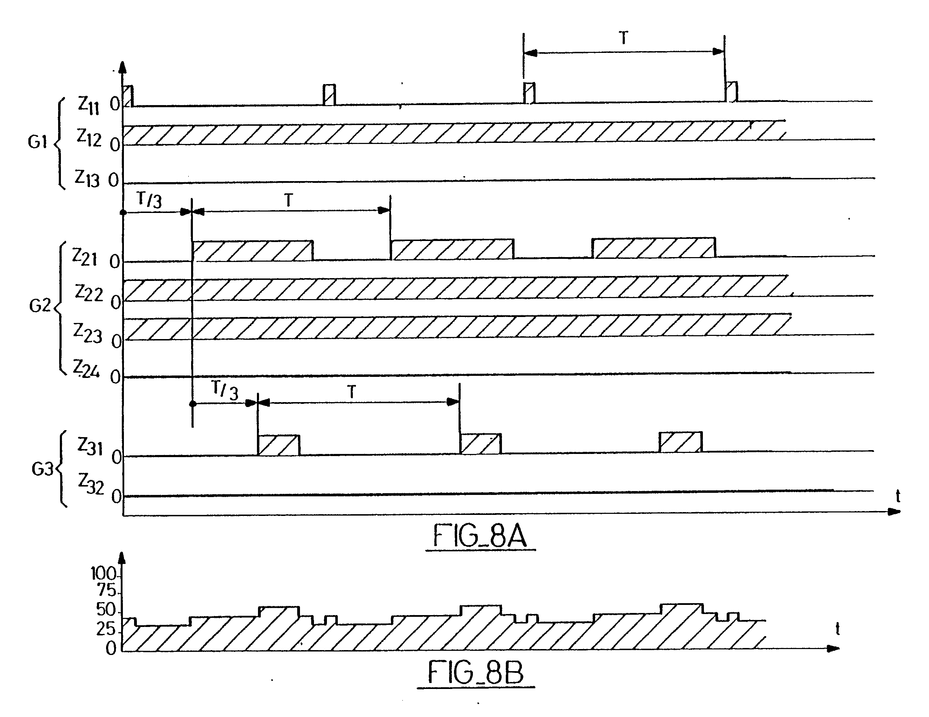

Les **fig. 8A et 8B** illustrent un quatrième mode de commande des moyens d'interruption, appelé mode incrémental distribué, destiné à être mis en oeuvre lorsque les charges sont associées par groupes $G_1$, $G_2$, $G_3$, ... qui consomment chacun une puissance $P_{t1}$, $P_{t2}$, $P_{t3}$ ... Dans l'exemple illustré, les groupes $G_1$, $G_2$, $G_3$ sont formés, respectivement, par les charges ($Z_{11}$, $Z_{12}$, $Z_{13}$), ($Z_{21}$, $Z_{22}$, $Z_{23}$, $Z_{24}$) et ($Z_{31}$, $Z_{32}$).

Le procédé de commande incrémental distribué vise à piloter les charges de chaque groupe suivant le mode de commande incrémental du type 1 ou 2 et à décaler entre eux les signaux assurant la commande en modulation d'onde des moyens d'interruption, pour chacun des groupes de charges. Le temps de décalage entre deux signaux est égal à la période **T** de modulation sur le nombre de groupes de charges.

Tel que cela apparaît plus précisément à la **fig. 8A**, chaque groupe de charges est commandé suivant le moyen d'interruption de type 2. En effet, le groupe $G_1$ qui consomme, par exemple, une puissance $P_{t1}$ = 35 %, comporte des charges $Z_{11}$, $Z_{12}$, $Z_{13}$ consommant, respectivement, une puissance égale à 5 %, 100 % et 0 %. Le groupe $G_2$ consomme une puissance de $P_{t2}$ = 65 %, de sorte que les charges associées $Z_{21}$, $Z_{22}$, $Z_{23}$ et $Z_{24}$ consomment, respectivement, une puissance égale à 60 %, 100 %, 100 % et 0 %. Le groupe $G_3$ consomme une puissance $P_{t3}$ = 10 %, de sorte que les charges $Z_{31}$, $Z_{32}$ consomment, respectivement, une puissance égale à 20 % et 0 %.

Le procédé de commande incrémental distribué consiste, dans cet exemple, à décaler ou à retarder de T/3 le moyen de commande du moyen d'interruption pilotant la charge $Z_{21}$ par rapport au signal de commande du moyen d'interruption associé à la charge $Z_{11}$ qui fonctionne également en modulation d'onde. De la même façon, le signal pilotant le moyen d'interruption associé à la charge $Z_{31}$ est décalé de T/3 par rapport au signal commandant le moyen d'interruption associé à la charge $Z_{21}$ qui fonctionne en modulation d'onde.

Un tel mode de fonctionnement permet de décaler dans le temps les appels de puissance sur le réseau, effectués par les moyens d'interruption fonctionnant en modulation d'onde, de sorte que les fluctuations de tension sont limitées, comme cela ressort clairement de la **fig. 8B**.

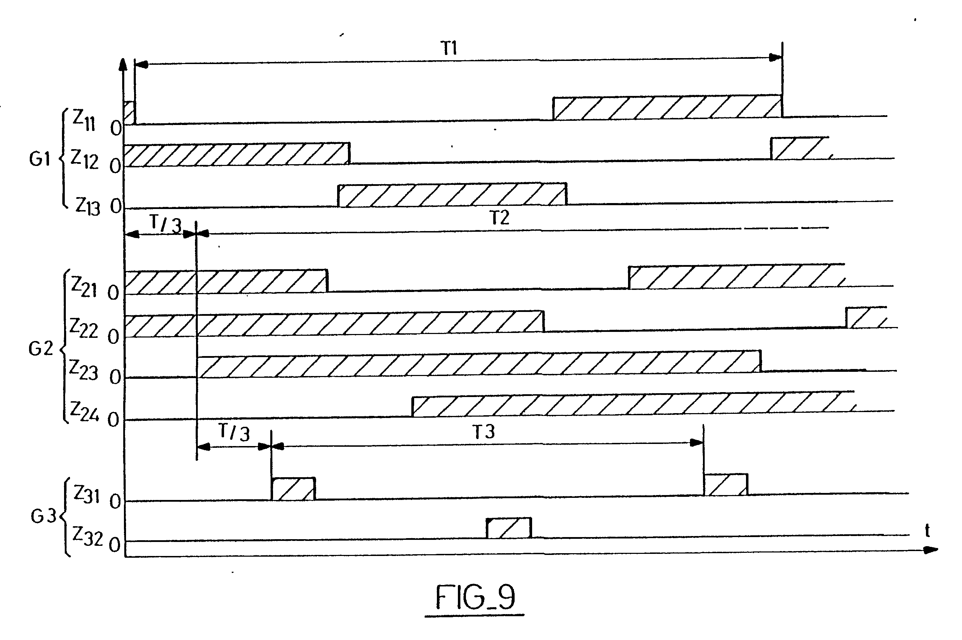

La **fig. 9** illustre un autre mode de commande des moyens d'interruption, dit mode incrémental tournant et distribué. Un tel procédé vise à piloter les charges de chaque groupe suivant le mode de commande incrémental tournant appliqué au mode 1 ou 2 et à retarder entre eux les signaux assurant la commande en modulation d'onde des moyens d'interruption de chaque groupe. Par rapport au mode décrit précédemment, ce procédé de commande nécessite d'effectuer une commande tournante des charges pour chacun des groupes formés.

Un tel procédé permet de limiter encore les fluctuations d'énergie sur le réseau, tel que cela apparaît à la **fig. 8B**.

Il apparaît donc que le dispositif selon l'invention permet d'assurer la gestion de commutations de puissance suivant différents modes de fonctionnement visant tous à réduire les harmoniques de tension et le phénomène de flicker sur un réseau d'alimentation électrique et ce, quel que soit le mode de commande des moyens d'interruption par des signaux logiques ou analogiques. La sélection d'un type de contrôle est choisie en fonction de l'application visée.

Par ailleurs, il est à noter que les charges peuvent présenter des valeurs de puissance maximale différentes. Dans cette hypothèse, si la commande est effectuée selon le mode incrémental du type 2 (**fig. 5A, 6A** ou **8A**) et si le procédé est inséré dans une boucle de régulation, il est préférable, afin de ne pas faire osciller la boucle de régulation, d'affecter, pour chaque groupe, la charge ayant la plus forte valeur de puissance à la voie qui assure le fonctionnement en modulation d'onde.

De plus, les moyens d'interruption 7 peuvent être constitués par des contacteurs statiques (gradateurs à thyristors par exemple) ou électromécaniques. Le mode incrémental de type 2 (**fig. 5A, 6A** ou **8A**) est particulièrement adapté à l'utilisation de contacteurs électromécaniques, sauf sur la voie qui assure la modulation d'onde. Lorsque la période de modulation $T$ est longue, par exemple égale à 10 minutes, tous les modes logiques peuvent être utilisés avec des contacteurs électromécaniques.

L'invention n'est pas limitée aux exemples décrits et représentés, car diverses modifications peuvent y être apportées sans sortir de son cadre.

**Revendications**

1- Procédé pour commander, à partir d'un réseau unique d'ondes, l'alimentation de $\underline{n}$ charges ($Z_1$, $Z_2$, ... $Z_n$) consommant chacune une puissance maximale ($P_1$, $P_2$, ... $P_n$) du type consistant à piloter un ensemble de moyens d'interruption (7) assurant le contrôle de l'alimentation des charges, chaque moyen d'interruption étant placé en série avec une charge,
caractérisé en ce qu'il consiste, pour chaque puissance totale désirée consommée (**Pt**) par un groupe de charges :
- à commander en pleine onde un nombre déterminé (**N**) de moyens d'interruption (7) afin que les charges associées consomment chacune leur puissance maximale, le nombre (**N**) de moyens d'interruption commandés étant déterminé de manière que la différence de puissance (**dP**), entre la somme des puissances maximales des charges commandées et la puissance désirée, soit inférieure à la puissance maximale d'une des charges du groupe,
- à commander en modulation d'onde un moyen d'interruption (7) déterminé, de manière que la charge associée consomme la différence de puissance (**dP**) entre la somme des puissances des charges commandées en pleine onde et la puissance désirée,
- et à commander les autres moyens d'interruption (7) en mode non conducteur, afin que les charges associées consomment chacune une puissance nulle.

2- Procédé selon la revendication 1, caractérisé en ce qu'il consiste à procéder, dans chacun des groupes de charges, au classement de moyens d'interruption (7) selon un ordre déterminé et en ce que les (**N**) moyens d'interruption commandés en pleine onde correspondent aux (**N**) premiers moyens d'interruption, tandis que le moyen d'interruption assurant la modulation d'onde forme le (**N + 1ième**) moyen d'interruption.

3- Procédé selon la revendication 1, caractérisé en ce qu'il consiste à procéder, dans chacun des groupes de charges, au classement des moyens d'interruption (7) selon un ordre déterminé et en ce que le moyen d'interruption, assurant la modulation d'onde, corresponde au premier moyen d'interruption, tandis que les (**N**) moyens d'interruption commandés en pleine onde correspondent aux (**2**

à N + 1ième) moyens d'interruption.

4- Procédé selon la revendication 2 ou 3, caractérisé en ce qu'il consiste, pour chaque groupe de charges, à définir une période de base (Tb) de durée déterminée et à commander, à chaque période de base, chaque moyen d'interruption selon le mode de fonctionnement que le moyen d'interruption du rang précédent possédait à la période précédente.

5- Procédé selon la revendication 3, caractérisé en ce qu'au moins le moyen d'interruption, assurant la modulation d'onde, est formé par un gradateur comportant une paire de thyristors montés en parallèle inverse, les autres moyens d'interruption étant formés chacun par un interrupteur électromécanique.

6- Procédé selon la revendication 3, caractérisé en ce qu'il consiste à commander en modulation d'onde, pour chaque groupe, le moyen d'interruption 7 associé à la charge ayant la puissance maximale la plus forte.

7- Procédé selon la revendication 5 ou 6, caractérisé en ce qu'il consiste à commander chaque gradateur par un signal analogique, le gradateur fonctionnant en retard de phase ou en train d'ondes.

8- Procédé selon la revendication 5 ou 6, caractérisé en ce qu'il consiste à commander chaque gradateur par un signal logique.

9- Procédé selon les revendications 2 ou 3 et 8, caractérisé en ce qu'il consiste, pour les signaux assurant la commande des gradateurs en modulation d'onde pour chacun des groupes, à retarder les signaux entre eux pour éviter des commutations simultanées.

10- Dispositif pour la mise en oeuvre du procédé de commande selon l'une des revendications 1 à 9, caractérisé en ce qu'il comporte :
- un microcontrôleur (3),
- un convertisseur numérique analogique (4) dont la sortie est reliée à un multiplexeur (5),
- une série d'échantillonneurs-bloqueurs (6) reliés au multiplexeur et commandant chacun un moyen d'interruption (7),
- un circuit comparateur (15) recevant les informations de la sortie du convertisseur numérique-analogique (4) et d'un régulateur (9) associé à chaque groupe de charges,
- et un circuit de sélection (16) permettant de choisir le signal analogique ou logique de commande des moyens d'interruption, ainsi qu'un circuit de sélection du mode de commande des moyens d'interruption.

11- Ensemble multiprocesseurs, caractérisé en ce qu'il comporte une série de dispositifs selon la revendication 10, connectés entre eux par un bus de communication (8).

FIG_1

FIG.2

EP 0 408 472 A1

FIG_3A

FIG_3C

FIG_3B

FIG_4A

FIG_4B

FIG_4C

FIG_5A

FIG_5B

FIG_6A

FIG_6B

FIG_7A

FIG_7B

EP 0 408 472 A1

FIG_7c

FIG_7E

FIG_7D

FIG_8A

FIG_8B

EP 0 408 472 A1

FIG_9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-055315 (CYBOREX LABORATORIES, INC.)<br>* abrégé *<br>* page 3, ligne 12 - page 6, ligne 17 *<br>* page 8, ligne 7 - page 9, ligne 22 *<br>* page 11, ligne 13 - page 12, ligne 5; figures 1-3 * | 1, 10 | H02J3/14 |
| Y | --- | 5-9, 11 | |
| X | FR-A-2561462 (J.P. HEBERT)<br>* page 5, ligne 31 - page 9, ligne 14; figures 1, 9-11 * | 1 | |
| Y | --- | 5-7 | |
| X | FR-A-2567333 (R. CORBIER)<br>* page 2, ligne 36 - page 3, ligne 13; figure 1 * | 1 | |
| Y | --- | | |
| Y | FR-A-2432789 (P. BRUN)<br>* page 2, lignes 20 - 31; figure 1 *<br>--- | 7 | |
| Y | EP-A-004199 (LYONS AUSTRALIAN CAPITAL TERRITORY)<br>* abrégé; figures 1-6 *<br>--- | 8, 9 | DOMAINES TECHNIQUES RECHERCHES (Int. Cl.5) |
| Y | EP-A-015666 (SOUTH EASTERN ELECTRICITY BOARD)<br>* page 11, ligne 21 - page 12, ligne 6; figure 1 *<br>--- | 11 | H02J |
| A | US-A-4357665 (W. KORFF)<br>* abrégé *<br>* colonne 38, ligne 7 - colonne 40, ligne 17 *<br>* colonne 54, ligne 8 - colonne 62, ligne 51; figures 1, 2 *<br>----- | 2-4 | |

Le présent rapport a été établi pour toutes les revendications

| Lieu de la recherche | Date d'achèvement de la recherche | Examinateur |
|---|---|---|
| LA HAYE | 14 AOUT 1990 | HELOT H.V. |